Europäisches Patentamt

European Patent Office

Office européen des brevets

(19)

(11) Veröffentlichungsnummer: **0 045 838**
**B1**

(12) ## EUROPÄISCHE PATENTSCHRIFT

(45) Veröffentlichungstag der Patentschrift:
05.02.86

(51) Int. Cl.⁴: **D 06 F 39/08**

(21) Anmeldenummer: **81104255.5**

(22) Anmeldetag: **03.06.81**

(54) **Verfahren zum Variieren eines von Hand einstellbaren Programmablaufes einer automatisch arbeitenden Waschmaschine und Waschmaschine zum Durchführen des Verfahrens.**

(30) Priorität: **13.08.80 DE 3030656**

(43) Veröffentlichungstag der Anmeldung:
**17.02.82 Patentblatt 82/7**

(45) Bekanntmachung des Hinweises auf die Patenterteilung:
**05.02.86 Patentblatt 86/6**

(84) Benannte Vertragsstaaten:
**CH DE FR GB IT LI SE**

(56) Entgegenhaltungen:
**DE - A - 2 655 797**
**DE - A - 2 821 427**
**DE - A - 2 951 926**
**DE - C - 853 151**
**DE - C - 900 690**

(73) Patentinhaber: **BOSCH-SIEMENS HAUSGERÄTE GMBH STUTTGART, Hochstrasse 17, D-8000 München 80 (DE)**

(72) Erfinder: **Stehr, Thomas, Dipl.-Ing., Rohweihstrasse 11, D-1000 Berlin 27 (DE)**
Erfinder: **Brodzina, Lieselotte, Giselerstrasse 21, D-1000 Berlin 31 (DE)**
Erfinder: **Graf, Richard, Dipl.-Ing., Rieppeistrasse 18, D-1000 Berlin 13 (DE)**

**Beschreibung**

Die Erfindung geht aus von einem Verfahren zum Variieren eines von Hand einstellbaren Programmablaufs mit einer Aufheizphase und einer Temperaturhaltephase bei einer autonnatisch arbeitenden Waschmaschine, die mindesrens einen Kaltund einen Warmwasser-Zulauf aufweist.

Bisher bekannte Waschmaschinen, die mindestens einen Kalt- und einen Warmwasser-Zulauf aufweisen, haben ihre Programmgestaltung von der Tatsache unabhängig gemacht, daß mehr oder weniger warmes Wasser bei Programmbeginn zulaufen kann. In der älteren europäischen Patentanmeldung 31 016 ist beschrieben worden, welche besonderen Vorteile für den Programmablauf und für die Wäsche erzielbar sind, wenn zu Beginn des Programmablaufs start kaltem warmes Wasser zufließt. Dann kann nämlich die Temperaturhaltephase nach Erreichen der gewünschten Waschremperatur der Lauge auf null bis 40 % der jenigen Dauer verkürzt werden, die üblicherweise bei einem Programmabschnitt für normal verschmutzte Wäsche vorgesehen wird, bei denn zu Beginn nur kaltes Frischwasser zuläuft.

Zwar sieht die DE-A-26 55 797 vor, nach denn Erkennen von warmem zugelaufenen Frischwasser, die Eleizleistung zu verringern, wodurch der Temperaturplan verändert wird. Es ergibt sich in der Folge nämlich ein flacherer Temperaturanstieg, so daß die gewünschte Waschtemperatur wenigstens ungefähr zum gleichen Zeitpunkt seit Eleizungsbeginn erreicht wird wie bei einer Aufheizphase, die bei der Temperatur von kaltem Frischwasser beginnt. Die Dauer der Temperaturhaltephase bleibt jedoch unverändert, wie auch die Gesamtdauer des Programmablaufs. Sieht man von der Anwendung warmen Wassers ab, das ohne Einsatz von fossilen Brennstoffen erhitzt wurde, dann ergibt sich bei dem bekannten Verfahren keine weitere Möglichkeit zur Einsparung von Heizenergie und Leit.

Der Erfindung liegt nun die Aufgabe zugrunde, ein Verfahren der eingangs genannten Art so zu gestalten, daß beim Zulaufen von warm em Frischwasser der Program mablauf wäscheschonend an die jeweilige höhere Anfangstemperatur angepaßt ist und außerdem die Erkenntnisse der EP-A-31 016 angewandt werden, durch die eine Einsparung von Heizenergie und Zeit m öglich ist. Dabei muß die Tatsache überwacht werden, ob tatsächlich warmes Wasser zugelaufen ist. Eine Überwachung der Betätigung des Warm wasserventils oder des Flusses im Warm wasserventil genügt dem nach nicht, weil bei falschem Anschlug des Magnetventils oder bei abgekühltem Wasser in der Warm wasser-Netzleitung der Zulauf von warmem Wasser unrichtigerweise signalisiert würde.

Die Erfindung löst die vorgenannte Aufgabe dadurch, daß zu Beginn des Programmablaufes nach einer ersten Phase, die zum Zulaufen von warmem Wasser vorgesehen ist, die Temperatur des zugelaufenen Wassers gemessen wird und bei von der Temperatur des Kaltwassers um positive Werte abweichender Meßtemperatur der eingestellte Program mablauf bezüglich des Zeitablaufplanes während der Temperaturhaltephase oder bezüglich dieses und des Planes der Bewegungszyklen für die Wäsche entsprechend der Meßtemperatur verändert wird.

Durch die erfindungsgemäge Lösung hat der Hersteller einer Programm steuereinrichtung für eine eingangs genannte Waschmaschine vielfältige Möglichkeiten an der Hand, den Programmablauf bezüglich Zeitablauf und Bewegungszyklen der jeweiligen Anfangstemperatur des zugelaufenen Wassers anzupassen. Es ist daher erstmals möglich, den eingestellten Programmablauf genau an die vorliegenden Temperaturverhältnisse des zulaufenden Wassers anzupassen, so daß das danach ablaufende Programm bezüglich Energie, Wasser- und Waschmitteleinsatz immer optimal gestaltet wird.

In einer automatisch arbeitenden Waschmaschine, die eine Steuerschaltung und Magnetventile für den Kalt- und Warmwasserzulauf enthält, kann das erfindungsgemäße Verfahren besonders vorteilhaft dann durchgeführt werden, wenn die Steuerschaltung einen Temperaturmeßfühler und zwei Vergleicher enthält, die einerseits an den Temperaturmeßfühler und andererseits an je eine Referenzgrößenquelle angeschlossen sind, wenn ferner der eine Vergleicher ausgangsseitig mit den Magnetventilen und der andere Vergleicher mit einer bistabileh Befehlsschaltung für den Programmablauf verbunden ist.

Elektronisch gesteuerte Waschmaschinen eignen sich in besonderer Weise zur Lösung der durch die Variation der unterschiedlichen Parameter vielfältigen Waschprogramme. Eine für eine solche elektronische Steuerungseinrichtung besonders geeignete Schaltung ist die zuvor angegebene. Darin läßt sich durch die Feststellung, ob warmes oder kaltes Wasser gemessen wird, entsprechend das Kaltwasser-Magnetventil oder das WarmwasserMagnetventil steuern. Andererseits empfängt die Steuerschaltung entsprechende Befehle für den Programmablauf, wenn der andere Vergleicher bestimmte, durch die Referenzgrößenquelle einstellbare, Temperaturen feststellt.

Die Referenzgrößenquellen können in besonders vorteilhafter Weise in Abhängigkeit vom eingestellten Programmablauf und/ oder von der jeweils ablaufenden Programmphase einstellbar sein. Sie sind dadurch in die Steuerschaltung gut einbeziehbar und können beim Eingeben des Programmablaufes sowohl wie beim automatischen Programmablauf durch variable Prozeßdaten eingestellt bzw. immer wieder angepaßt werden.

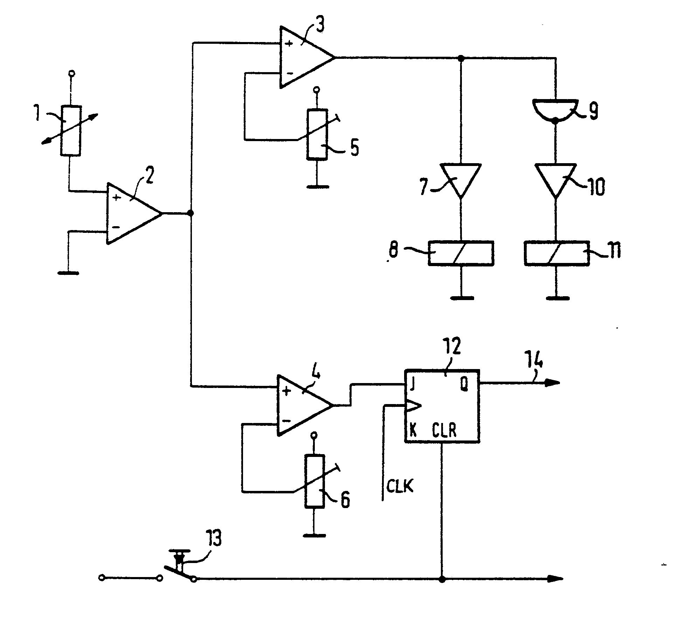

Anhand eines in der Zeichnung schematisch dargestellten Schaltbildes für einen solchen Teil der Steuerschaltung ist das erfindungsgemäße Verfahren näher erläutert.

Der Temperaturmeßfühler 1 ist an einer geeigneten Stelle im Laugenbehälter der Maschine angeordnet, an der eine möglichst gleichmäßige Mischtemperatur des zugelaufenen Wassers gemessen werden kann. Dieser Temperaturmeßfühler kann beispielsweise einen NTC-Widerstand enthalten. Er ist an den positiven Eingang eines Verstärkers 2 angeschlossen, dessen negativer Eingang spannungsmäßig fest liegt. Das verstärkte Temperaturmeßsignal ist an die positiven Eingänge zweier Vergleicher 3 und 4 geführt. Die negativen Eingänge sind mit einem Abgriff einer variablen Spannungsquelle 5 bzw. 6 verbunden. Der Ausgang des Vergleichers 3 steuert entweder über einen Verstärker 7 das Kaltwasser-Magnetventil 8 oder über einen Negator 9 und den Verstärker 10 das Warmwasser-Magnetventil 11.

Der Ausgang des Vergleichers 4 ist m it einem I form ationseingang J eines FlipFlops 12 verbunden. Der positiv dynamische Eingang des Flip-Flops wird von einer nicht dargestellten Taktsignalquelle über die Leitung CLK gespeist und hält zusammen mit dem Signal am Informationseingang J das Flip-Flop in der Schaltstellung bei der am Ausgang Q ein Befehlssignal für die an die Ausgangsleitung 14 angeschlossene, nicht dargestellte Steuerschaltung anliegt. Am Eingang CLR des FlipFlops ist die Starttaste 13 angeschlossen; mit ihr kann das Flip-Flop wieder in die Grundstellung zurückgeschaltet werden, in der am Ausgang Q kein Signal anliegt.

Beim Messen einer niederen Temperatur (z.B. 14°C) des zugelaufenen Wassers durch den Temperaturmeßfühler i erhält der Vergleicher 3 am positiven Eingang ein entsprechend niederes Signal. Dessen Vergleich mit dem am negativen Eingang liegenden Signal führt beispielsweise dazu, daß der Ausgang des Vergleichers 3 kein Signal führt. Daher kann das Kaltwasser-Magnetventil 8 nicht ansprechen. Der Negator 9 kehrt aber dieses ' NullSignal' um, so daß der Verstärker 10 ein Steuersignal an das Warmwasser-Magnetventil 11 abgibt. Folglich fließt - sofern vorhanden - warmes Wasser zu. Steigt aufgrund des Zuflusses von warmem Wasser nun die Mischtemperatur des zugelaufenen Wassers im Laugenbehälter an, so mißt der Temperaturmeßfühler 1 diese höhere Temperatur und der Verstärker 2 gibt ein entsprechend größeres Signal an den positiven Eingang des Vergleichers 3. Fällt der Vergleich der Eingangssignale am Vergleicher 3 zugunsten des Temperaturmeßsignal aus, so wird sein Ausgangssignal im Verstärker 7 verstärkt und das Kaltwasser-Magnetventil 8 eingeschaltet. Der Negator 9 verhindert nun, daß ein Signal an das Warmwasser-Magnetventil weitergeleitet wird.

Die Referenzgrößenquelle 5 gibt die Temperatur vor, bei der sich der oben geschilderte Vorgang abspielen soll.

Die Ausgangssignale des Verstärkers 2 werden auch an den Vergleicher 4 geleitet. vorgeben, bei deren Erreichen am Ausgang des Vergleichers 4 das Signal von '0' auf '1' übergeht. Der positive Übergang des CLK-Signals schaltet das Flip-Flop 12 nun in einen Zustand, in dem seine Ausgangsleitung 14 das Befehlssignal führt. Die Temperatur, die durch die Referenzgrößenquelle 6 vorgegeben ist, kann beispielsweise bei 30°C liegen und signalisiert der Steuerschaltung, daß dem Warmwasser-Magnetventil 11 warmes Wasser angeboten wird und das Magnetventil ordnungsgemäß arbeitet. Entsprechend kann die Steuerschaltung eine Programmvariation wählen, die beim Zulaufen von warmem Wasser besonders vorteilhaft ist.

Die Taste 13 kann beispielsweise die Starttaste der zugeordneten Programmsteuervorrichtung sein und setzt zu Beginn eines Programmablaufes das Flip-Flop 12 wieder zurück.

**Patentansprüche**

1. Verfahren zum Variieren eines von Hand einstellbaren Programmablaufes mit einer Aufheizphase und einer Tem peraturhaltephase bei einer automatisch arbeitenden Waschmaschine, die mindestens einen Kalt- und einen Warmwasserzulauf aufweist, dadurch gekennzeichnet, daß zu Beginn des Programmablaufes nach einer ersten Phase, die zum Zulaufen von warmem Wasser vorgesehen ist, die Tem peratur des zugelaufenen Wassers gemessen wird und bei von der Temperatur des Kaltwassers um positive Werte abweichender Meßtemperatur der eingestellte Programmablauf bezüglich des Zeitablaufplanes während der Temperaturhaltephase oder bezüglich dieses und des Planes der Bewegungszyklen für die Wäsche entsprechend der Meßtemperatur verändert wird.

2. Automatisch arbeitende Waschmaschine zum Durchführen des Verfahrens nach Anspruch 1, die eine Steuerschaltung und Magnetventile für den Kalt- und Warmwasserzulauf enthält, dadurch gekennzeichnet, daß die Steuerschaltung einen Temperaturmeßfühler (1) und zwei Vergleicher (3 und 4) enthält die einerseits an den Temperaturmeßfühler (1) und andererseits an je eine Referenzgrößenquelle (5 und 6) angesschlossen sind, und daß der eine Vergleicher (3) ausgangsseitig mit den Magnetventilen und der andere Vergleicher (4) mit einer bistabilen Befehlsschaltung (12) für den Programmablauf verbunden ist.

3. Automatische Waschmaschine nach Anspruch 2, dadurch gekennzeichnet, daß die Referenzgrößenquellen (5 und 6) der Vergleicher (3 und 5) in Abhängigkeit vom eingestellten Programmablauf und/oder von der jeweils ablaufenden Programmphase einstellbar sind.

**Claims**

1. Method for variation of a program run selectable by hand with a heating-up phase and a temperature-holding phase in an automatic clothes washing machine having at least a cold water inlet and a hot water inlet, charac- terized in that at the beginning of the program run after a first phase, which is provided for running in of hot water, the temperature of the water running in is measured and, if the measured temperature is higher than the temperature of the cold water, the selected program run is modified in respect of the course of time during the temperature-holding phase or in respect of the latter and in respect of the scheme of the moving cycles for the treatment of clothes corresponding to the measured temperature.

2. Automatic clothes washing machine providing the method according to claim 1 comprising a control circuitry and solenoid valves for the inlets of cold and hot water, characterized in that the control circuitry comprises a temperature sensor (1) and two comparators (3 and 4), which are connected on the one hand to the temperature sensor (1) and on the other hand to one source of two reference sources (5 and 6), and in that the output of one of both comparators (3) is connected to the solenoid valves and the output of the other comparator (4) to a bistabile instruction control (1) for the program run.

3. Automatic clothes washing machine according to claim 2, characterized in that the reference sources (5 and 6) of the comparators (3 and 4) are adjustable in relation of the selected program run and/or of each running phase of the program.

**Revendications**

1. Procédé de variation du déroulement d'un programme, réglable manuellement, par une phase d'échauffement et une phase de maintien en température, dans le cas d'une machine à laver à fonctionnement automatique comportant au moins une arrivée d'eau froide et une arrivée d'eau chaude, caractérisé par le fait qu'au début du déroulement du programme, après une première phase prévue pour l'arrivée d'eau chaude, la température de l'eau d'arrivée est mesurée et dans le cas où cette mesure s'écarte de la température de l'eau froide d'une valeur positive, le déroulement du programme, tel qu'il a été réglé, est modifié selon la température mesurée en ce qui concerne le plan de déroulement en fonction du temps, pendant la phase de maintien en température, ou en ce qui concerne ce plan et celui des cycles de mouvements pour le lavage.

2. Machine à laver fonctionnant automatiquement pour la réalisation du procédé selon revendication 1, comprenant un circuit de commande et des électrovannes pour l'arrivée d'eau froide et d'eau chaude, caractérisée par le fait que le circuit de commande comporte un capteur de température (1) et deux comparateurs (3 et 4) qui sont reliés, d'une part, au capteur de température (1) et, d'autre part, chacun à une source de grandeurs de référence (5 et 6), et que l'un des comparateurs (3) est relié, du côcé de la sortie, aux électrovannes, l'autre comparateur (4) étant relié à un circuit bistable d'ordre (12) pour le déroulement du programme.

3. Machine à laver automatique selon revendication 2, caractérisée par le fait que les sources de grandeurs de référence (5 et 6) des comparateurs (3 et 4) sont réglables en fonction du déroulement du programme qui a été réglé et/ou de la phase de programme qui est alors en cours d'exécution.